# EUROPEAN PATENT APPLICATION

(11) **EP 1 245 297 A1**
(43) Date of publication of application: **02.10.2002**
(21) Application number: 01830210.9
(22) Date of filing: 27.03.2001
(51) Int. Cl.: B05B 15/06, F16L 37/092, F16L 37/084

(54) **Fast mounting nozzle for high pressure fluids, in particular for use in saunas, shower cabins and similar equipment**

(71) Applicant: I.M.P.A. F.LLI Togno S.r.l., 28881 Casale Conte Cerro (Verbania) (IT)
(72) Inventor: Togno, Franco, c/o I.M.P.A. F.LLI TOGNO S.r.l., 28881 Casale Conte Cerro (Verbania) (IT)
(74) Representative: Botti, Mario

(57) **Abstract**

The present invention relates to a quick assembly, all-in-one nozzle (1), which is simple, reliable, compact and suitable for application in saunas, shower cabins and similar equipment, and comprising: an essentially cylindrical cup-shaped body (2), a dispensing insert (22) mounted in said body (2) and equipped with holes (23), a one-way or multi-way pipe fitting (3) in fluid connection with said body (2) for connecting the nozzle (1) to a fluid supply circuit. Each pipe fitting (3) way is provided with a housing seat (6) for a coupling element (11) effective to receive and hold by quick coupling a free end (7) of a fluid circuit junction pipe.

## Description

### Field of Application

The present invention relates to a quick assembly nozzle for dispensing fluids under pressure, particularly for use in saunas, shower cabins and similar equipment.

More specifically, but not exclusively, the invention relates to a nozzle of the above type comprising: an essentially cylindrical cup-shaped body, a dispensing insert mounted in said body and provided with holes, a one-way or multi-way pipe fitting in fluid connection with said body for connecting the nozzle to a fluid supply circuit.

### Prior Art

As it is well known in this specific application field, several types of dispensing swivel nozzles have been provided over the years, particularly suitable to be mounted in hydro-sanitary or fitness equipment such as saunas, whirl-pool bathtubs, shower cabins and similar equipment.

Such nozzles share the capability of dispensing fluids under pressure, generally water, but also steam or a mixture of said liquid and gas.

Advantageously, said nozzles are of the swivel-type in order to orient the dispensed fluid in the direction required by the user and can include more or less complex valve means, adapted to adjust the speed and flow rate of the dispensed fluid flow.

A known swivel nozzle of relatively simple construction, effective to mix air and water in applications with shower cabins, is disclosed, for example, in the Italian utility model no. 0 216 885.

Said document discloses a nozzle comprising a semi spherical dispensing insert mounted, in a swivelling manner, in an hydraulic connection body and constrained by a ring nut.

Another known solution to provide a swivel nozzle is disclosed in the European patent no. 0 596 307.

Both solutions specifically relate to the possibility of orienting the nozzle in an easy and effective way. The second solution also aims at preventing calcareous scaling which might endanger the operational reliability.

However, none of said solutions faces the problem of improving the hydraulic connection between the swivel insert housing bodies and the fluid supply circuit junction pipes.

Said documents both disclose T-shaped tubular pipe fitting lengths formed integral with the nozzle insert housing body, said pipe fitting lengths being externally equipped with conventional annular projections.

The ends of the fluid supply circuit junction pipes are tight fit on said pipe fitting lengths, equipped with annular projections and held tight by means of conventional clamps.

Said assembly operation requires a lot of time for being properly performed and provides also the intervention of specialised personnel. Moreover, the fastening by means of clamps must be particularly effective given that the dispensing nozzles come into contact with high pressure fluids and that the tubular pipe fitting lengths, at the end of the assembly step, are positioned inside the hydro-sanitary equipment at locations which cannot be easily inspected.

Finally, it must be pointed out that the connection operation to the fluid circuit take place in operative conditions which are particularly uncongenial to the operator, who is obliged to couple the pipes to the tubular pipe fitting lengths in a very little manipulation space.

The technical problem underlying the present invention is to provide a dispensing nozzle, preferably but not exclusively of the swivel-type, with structural and functional features such to enable an extremely quick assembly thereof in the relevant hydro-sanitary equipment, allowing the nozzle to be very easily jointed to the fluid supply circuit thereof.

### Summary of the Invention

The solutive idea on which this invention stands is to provide pipe fitting lengths to the nozzle body as housing seats for quick coupling and seal coupling elements'of the ends of the fluid supply circuit pipes.

Based on this solutive idea, the technical problem is solved by a dispensing nozzle as previously indicated and defined in the characterising part of Claim 1 and following.

The features and advantages of the nozzle according to the invention will be apparent from the following description of an embodiment thereof, given by way of non-limiting example, with reference to the accompanying drawings.

### Brief Description of the Drawings

In the drawings:

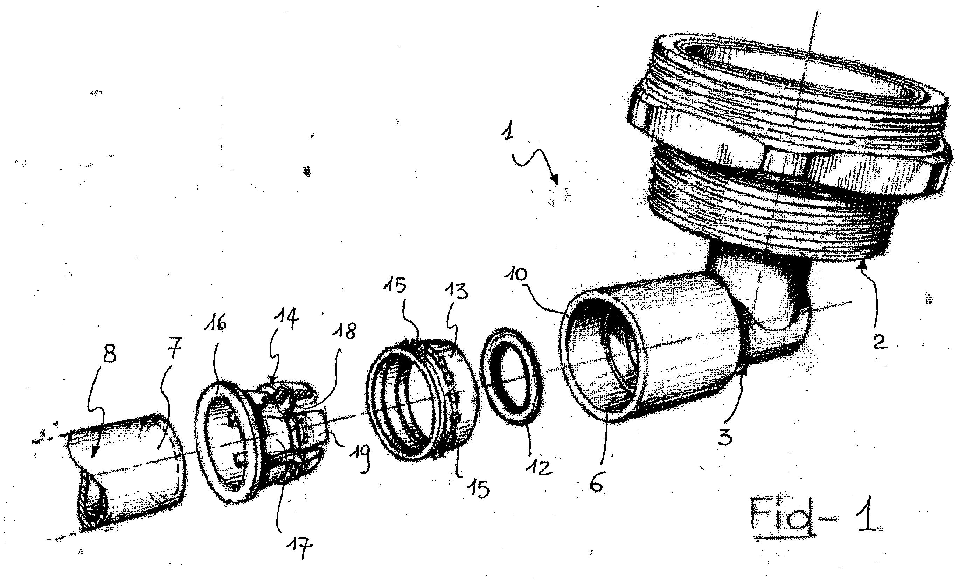

Figure 1 shows a perspective exploded view of a dispensing nozzle according to the invention;
Figure 2 shows a schematic sectional view of the nozzle shown in Figure 1;
Figure 3 shows a schematic view of a detail of the nozzle according to the invention.

### Detailed Description

With reference to the drawings, a dispensing nozzle according to the invention, suitable to be mounted in hydro-sanitary equipment such as saunas, whirl-pool bathtubs, shower cabins and similar equipment, is generally and schematically indicated with 1.

The nozzle 1 comprises an essentially cylindrical cup-shaped body 2 and a one-way or multi-way pipe fitting 3 for connecting the nozzle 1 to a fluid supply circuit.

The body 2 and the pipe fitting 3 are obviously in fluid connection to each other and are preferably moulded out of a plastic material, e.g. nylon or polyethylene.

The pipe fitting 3 can be T or L-shaped depending on whether it has to provide a series connection to other nozzles or to be coupled to the last nozzle of the series. The body 2 can also be connected to further multi-way pipe fittings, e.g. three or four, electively for receiving two different fluids, each fluid being supplied by a relevant supply circuit.

Advantageously, according to the invention, each pipe fitting 3 comprises a first inner length 4, substantially coaxial to the cylindrical body 2, and at least a second length 5 extending orthogonally to said first length 4.

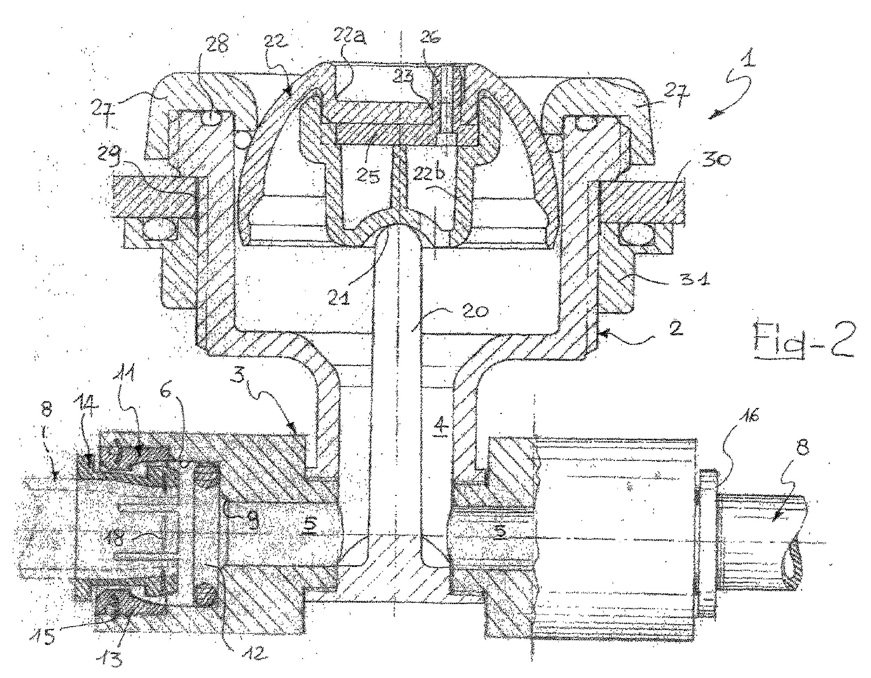

When the pipe fitting is of the T-type, two opposed reciprocally aligned lengths 5 extending orthogonally to said first length 4 are obviously provided, as shown in Figure 2.

Advantageously, the lengths 5 provide housing seats 6 for the end 7 of a pipe 8 included in the fluid supply circuit.

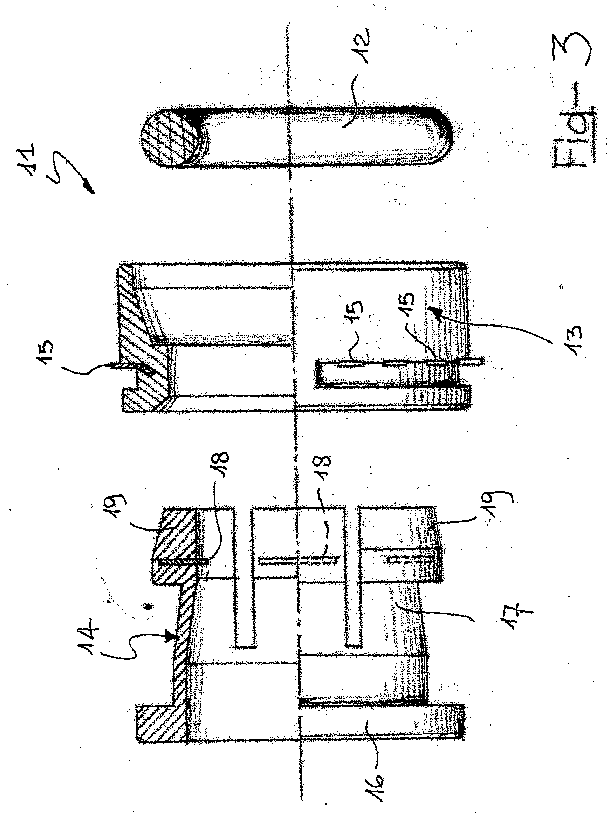

More particularly, as clearly shown in Figure 3 sectional view, the seats 6 of the pipe fitting 3 are preferably cylinder-shaped and the bottom thereof is equipped with a fluid through-hole 9.

Each seat 6 has a mouth 10 through which a coupling element 11, hereinafter called cartridge, is tight fit into the seat.

Said cartridge 11 essentially comprises three elements: an O ring 12, preferably made of nitrile rubber and located on the bottom of the seat 6 around the hole 9, an annular body 13 and a tweezers element 14.

Said tweezers element 14 is crown-shaped and equipped with an annular base 16 and a plurality of elastic tines 17 formed integral with the annular base, and extending parallelly overhanging with annular configuration. Each tine 17 has a free end equipped with an externally and radially overhanging saw tooth strike tooth 19.

The tweezers element 14 is provided for insertion into the annular body 13, with the tines 17 facing inward in the seat 6, and thus towards the O ring 12 which is therefore positioned beside the annular body 13.

The cartridge 11 is made of synthetic material, e.g. an acetalic copolymer. The annular body 13 is peripherally equipped with a plurality of radially overhanging metal teeth 15 located on the outer circumferential surface thereof.

When the annular body 13 is inserted in the seat 6, the metallic teeth 15 grip on the seat 6 and penetrate therein at a depth which depends on the hardness of the seat composing material.

The O ring 12 is inserted first into the seat 6, followed by the annular body 13 and the tweezers element 14.

Preferably, the tweezers element 14 is equipped with metallic teeth 18 located on the inner side of the tines 17 at the free end thereof and radially overhanging inward.

The end 7 of the fluid circuit junction pipe 8 is tight fit through the annular base 16 of the tweezers element 14 to reach the bottom of the seat 6. The insertion of the end 7 of the pipe 8 bends the tines 17 outward and radially; consequently, the end teeth 19 of the tines 17 hook the edge of the annular body 13 inside the seat 6, keeping the tweezers element 14 in position.

Moreover, the insertion of the end 7 of the pipe 8 slightly activates the teeth 18 in the insertion and penetration direction. Therefore, a following strong tug at the pipe 8 in a direction opposite to the insertion direction, i.e. towards extraction, allows the teeth 18 to grip on the outer surface of the pipe end 7, keeping the pipe irreversibly inserted in the seat 6.

The coupling of the end 7 of the pipe 8 to the cartridge 11 is essentially provided through a simple quick coupling movement, thereby considerably reducing the time for assembling the nozzle 1 and for juncting it to the fluid circuit.

It is important to notice that, when the fluid circuit pressure is raised, the cartridge 11 is held in a still firmer way in the seat 6 as occurs, similarly, to the end 7 of the pipe 8 which is held in a still firmer way by the cartridge 11, since the penetration, and therefore the teeth 15 and 18 holding force, is proportional to the exerted pressure.

The coupling of the pipe 8 to the cartridge 11 is thus not only very quick, but it also supports high operation pressure.

For completeness of description, it must be pointed out that an axial pin 20 is formed as one piece in the nozzle body 2. Said axial pin 20 has a free rounded end 21 whereon a substantially hemispheric insert 22 is mounted in a swivelling manner, centred on the centre of the corresponding free end 21. The insert 22 has a lowered apical end 22a and is equipped with dispensing holes 23 which are fluid-connected to the body 2.

The insert 22 is supported by, and integral with, a glass-shaped. element 22b having a recess formed on the bottom thereof, inside the body 2, and connected to the free end 21 of the pin 20.

A plate 25 of elastic or gummy material is inserted between the mouth of the glass-shaped element 22b and the inner part of the apical end 22a of the insert 22, said plate being equipped, in correspondence with the holes 23, with short ducts 26 which can be deformed, passing through the holes 23 and overhanging from the lowered apical end 22a of the insert 22. Said ducts 26 are coaxial to the holes 23, the outer diameter thereof substantially corresponding to the inner diameter of the holes 23.

Said short ducts 26, overhanging, for example, of only 5-7 mm from the bottom of the lowered end 22a, have therefore an overhang extension which is contained in the hemispheric profile. Said ducts can be bent and deformed by hand, even during operation, by simple movement of a hand fingertip. Calcareous scaling in correspondence with the holes 23 is therefore avoided and an easy cleaning of holes 23 is thus favoured.

An annular ring nut 27 is screwed on the mouth of the body 2, opposed to the pipe fitting 3, and the hemispheric surface 24 of the insert 22 abuts against said ring nut 27.

An annular seal 28 is provided between the ring nut 27 and the body 2.

The nozzle 1 is mounted into a hole 29 in a wall 30 of the hydro-sanitary equipment and is fastened on one side thereof by means of the ring nut 27 and by a further ring nut 31 screwed on the other side of the wall on the outer surface of the body 2 which is equipped with a corresponding thread.

The nozzle according to the invention offers the advantage of an almost instant assembly since the fluid circuit pipe fitting lengths are equipped with quick coupling housing seats 6 for the free ends of the fluid supply circuit pipes.

The cartridges 11 inserted in said seats 6 are quite short in length and require therefore longitudinally small seats.

Moreover, the nozzle according to the invention is of particularly simple and reliable construction and can be produced on a large scale through conventional moulding techniques.

A further advantage is that of being an all-in-one device comprising all the elements required for the connection to the fluid circuit.

Advantageously, a particularly compact and limited-size nozzle can therefore be obtained.

## Claims

1. A quick coupling nozzle (1) for dispensing fluids under pressure, particularly for application in saunas, shower cabins and similar equipment, comprising an essentially cylindrical cup-shaped body (2), a dispensing insert (22) mounted in said body (2) and equipped with holes (23), a one-way or multi-way pipe fitting (3) in fluid connection with said body (2) for connecting the nozzle (1) to a fluid supply circuit, **characterised in that** a seat (6) housing a coupling element (11), suitable for receiving a quick coupling free end (7) of a fluid circuit junction pipe, is provided on each way of the pipe fitting (3).

2. A nozzle according to claim 1, **characterised in that** said coupling element (11) irreversibly holds the free end (7) of said pipe (8).

3. A nozzle according to claim 1, **characterised in that** said coupling element (11) comprises an annular body (13) peripherally equipped with a plurality of metallic teeth (15) on the outer circumferential surface thereof, which are radially overhanging and gripping on the inner surface of the seat (6).

4. A nozzle according to claim 1, **characterised in that** said coupling element (11) also comprises a crown-shaped tweezers element (14) having an annular base (16) and a plurality of elastic tines (17) formed integral with the annular base and extending parallelly and overhanging with annular configuration, said tweezers element (14) being suitable to be inserted inside the annular body (13) with the tines (17) facing inward the seat 6, each tine (17) having a free end equipped with an externally and radially overhanging strike tooth (19).

5. A nozzle according to claim 1, **characterised in that** said. coupling element (11) comprises an O ring (12) located on the bottom of said seat (6) beside the annular body (13).

6. A nozzle according to claim 4, **characterised in that** said tweezers element (14) comprises in its turn a plurality of metallic teeth (18) positioned inside the annular base (16) and radially overhanging inward.

7. A nozzle according to claim 1, **characterised in that** said insert (22) has an hemispheric surface (24) and is mounted on the free end (21) of a pin (20) formed integral with the body (2) and coaxial thereto.

8. A nozzle according to claim 1, **characterised in that**, inside the body (2), said insert (22) has a recess connected to the free end (21) of the pin (20), centred on the centre of the hemispheric surface (24).

9. A nozzle according to claim 7, **characterised in that** said insert (22) has a lowered apical end (22a) wherein said holes (23) are formed, which is equipped with short ducts (26), that can be deformed, passing through said holes (23) and overhanging in the direction of fluid dispensing.

10. A nozzle according to claim 9, **characterised in that** said ducts (26) are coaxial to said holes (23) and have an overhang extension contained in the hemispheric profile.
